# EUROPEAN PATENT APPLICATION

(11) **EP 4 603 535 A1**
(43) Date of publication of application: **20.08.2025**
(21) Application number: 25157898.5
(22) Date of filing: 14.02.2025
(51) Int. Cl.: C08L 5/08

(54) **COMPOSITE AND METHOD FOR PRODUCING COMPOSITE**

(30) Priority: 16.02.2024 JP 2024021808
(71) Applicant: Seiko Epson Corporation, Tokyo 160-8801 (JP)
(72) Inventor: MATSUMOTO, Yasutaka, Suwa-shi, 392-8502 (JP)
(74) Representative: Lewis Silkin LLP

(57) **Abstract**

A composite contains: mushroom hyphae; a binder containing two or more carboxy groups per molecule and binding to the hyphae; and a divalent or higher metal cation. The carboxy groups are ionically crosslinked via the metal cation. It is also preferable to further contain a fiber. The fiber preferably contains cellulose.

## Description

The present application is based on, and claims priority from JP Application Serial Number 2024-021808, filed February 16, 2024, the disclosure of which is hereby incorporated by reference herein in its entirety.

### BACKGROUND

### 1. Technical Field

The present disclosure relates to a composite and a method for producing a composite.

### 2. Related Art

In recent years, there has been a growing demand in a market for products that use natural materials as products having a low environmental impact. For example, JP-T-2022-534025 discloses a cultured mycelium material containing branching hyphae obtained by disrupting one or more masses and a binder having a carboxy group. According to such a configuration, a cultured mycelium material having good mechanical strength and aesthetic quality can be obtained.

However, the binder having a carboxy group has hydrophilicity. Therefore, the cultured mycelium material has low moisture resistance, and causes a decrease in mechanical strength when placed in a high-humidity environment, for example. There is room for improvement in texture of the cultured mycelium material, and there is also a problem that use of the cultured mycelium material is limited.

Therefore, there is a demand for achieving a composite having excellent mechanical strength and moisture resistance and good texture.

### SUMMARY

A composite according to an application example in the present disclosure contains: mushroom hyphae; a binder containing two or more carboxy groups per molecule and binding to the hyphae; and a divalent or higher metal cation. The carboxy groups are ionically crosslinked via the metal cation.

A method for producing a composite according to an application example in the present disclosure, which is a method for producing the composite according to the application example in the present disclosure, includes: performing a hydrolysis treatment on a sheet containing the hyphae; bringing the sheet subjected to the hydrolysis treatment into contact with the binder containing two or more carboxy groups per molecule to bind the sheet and the binder to each other; and bringing the sheet to which the binder is bound into contact with the metal cation to ionically crosslink the carboxy groups via the metal cation to obtain the composite.

### BRIEF DESCRIPTION OF THE DRAWINGS

FIG. 1 is a process diagram showing a configuration of a method for producing a composite according to an embodiment.
FIG. 2 is Table 1 showing configurations of composites and evaluation results of the composites in Examples and Comparative Examples.
FIG. 3 is Table 2 showing configurations of composites and evaluation results of the composites in Examples and Comparative Examples.
FIG. 4 is Table 3 showing configurations of composites and evaluation results of the composites in Examples and Comparative Examples.

### DESCRIPTION OF EMBODIMENTS

Hereinafter, a composite and a method for producing a composite according to the present disclosure will be described in detail based on preferred embodiments shown in the accompanying drawings.

### 1. Composite

First, a composite according to an embodiment will be described.

The composite according to the embodiment contains: mushroom hyphae, a binder, a divalent or higher metal cation, and a fiber.

### 1.1. Mushroom Hyphae

The mushroom hyphae have a fibrous structure constituting mycelium of mushroom. A type of the mushroom is not particularly limited, and examples thereof include Agaricus arvensis, Agrocybe brasiliensis, Amylomyces rouxii, species of Amylomyces, Armillaria mellea, Aspergillus nidulans, Aspergillus niger, Aspergillus oryzae, Ceriporia lacerata, Coprinus comatus, Fibroporia vaillantii, Fistulina hepatica, Flammulina velutipes, Fomitopsis officinalis, Ganoderma sessile, Ganoderma tsugae, Hericium erinaceus, Hypholoma capnoides, Hypholoma sublaterium, Inonotus obliquus, Lactarius chrysorrheus, Macrolepiota procera, Morchella angusticeps, Myceliophthora thermophila, Neurospora crassa, Penicillium camembertii, Penicillium chrysogenum, Penicillium rubens, Phycomyces blakesleeanus, Pleurotus djamor, Pleurotus ostreatus, Polyporus squamosus, Psathyrella aquatica, Rhizopus microspores, Rhizopus oryzae, Schizophyllum commune, Streptomyces venezuelae, Stropharia rugosoannulata, Thielavia terrestris, Ustilago maydis, Shiitake mushroom (Lentinula genus), Meripilus giganteus (Meripilus genus), Grifola frondosa (Grifola genus), Leucopaxillus giganteus (Leucopaxillus genus), polyporaceae (Fomitopsis genus), and Tricholoma matsutake (Tricholoma genus).

The mushroom hyphae may aggregate with each other to form a mycelium. That is, a part or all of hyphae in the composite may be a mycelium formed by the aggregation of the hyphae. In the following description, mushroom hyphae are also simply referred to as "hyphae".

An average diameter of the hyphae is preferably set to be smaller than an average diameter of fibers. Accordingly, smooth texture derived from the hyphae is easily imparted to the composite.

The average diameter of the hyphae is not particularly limited, and is preferably 0.1 µm or more and 5.0 µm or less, and more preferably 0.3 µm or more and 3.0 µm or less. If the average diameter of hyphae is within the range, texture of the composite can be particularly enhanced.

The average diameter of the hyphae is measured as follows.

First, the composite is magnified and observed so that 100 or more hyphae are contained in one image, and an image is acquired. Next, 10 or more hyphal images are randomly selected, and a width of a hyphal image is measured. Then, an average value of measured values is taken as the average diameter of the hyphae.

An average length of the hyphae is not particularly limited, and is preferably 0.001 mm or more and 3.0 mm or less, more preferably 0.010 mm or more and 2.0 mm or less, and still more preferably 0.050 mm or more and 1.0 mm or less. If the average length of the hyphae is within the range, for example, when the composite is molded into a sheet, the hyphae are oriented along a surface of the composite, and the hyphae are moderately entangled with each other. Accordingly, the texture of the composite can be particularly enhanced.

The average length of the hyphae is measured as follows.

First, the composite is magnified and observed so that 100 or more hyphae are contained in one image, and an image is acquired. Next, 10 or more hyphal images are randomly selected, and a maximum length that can be taken in the hyphal image is measured. Then, an average value of measured values is taken as the average length of the hyphae.

### 1.2. Binder

The binder contains two or more carboxy groups per molecule and binds to the hyphae. "Binding to hyphae" refers to presence of a chemical bond between a carboxy group contained in the binder and an organic group contained in the hyphae. Specifically, the carboxy group contained in the binder forms an ester bond with the hydroxy group contained in the hyphae. The ester bond firmly binds the hyphae together.

When the composite contains fibers, it is preferable that the binder also binds to fibers in addition to hyphae. In this case as well, the carboxy group contained in the binder forms a chemical bond such as an ester bond with a hydroxy group contained in the fiber. Accordingly, the fibers are firmly bound to each other or the hyphae and the fibers are firmly bound to each other.

The hyphae preferably contain chitin. The chitin is contained as a component of a cell wall constituting the hyphae. The chitin is a high-molecular polysaccharide having N-acetylglucosamine in which an acetamide group (-NHCOCH₃) is added to glucose as a structural unit. Since the chitin has a hydroxy group, when the hyphae contain chitin, the hyphae are more likely to form an ester bond with the binder.

An acetamide group contained in the chitin is deacetylated by a hydrolysis treatment described later, and converted to an amino group. The amino group reacts with the carboxy group to form an amide bond. Therefore, through a hydrolysis treatment, hyphae can easily form an amide bond with the binder. As a result, an ester bond and an amide bond are formed between the hyphae and the binder, and mechanical strength of the composite is particularly enhanced.

The carboxy group contained in the binder ionically crosslinks with another carboxy group via a metal cation described later. Accordingly, hyphae are crosslinked to each other via the binder and the metal cation, thereby enhancing the mechanical strength of the composite. When the composite contains fibers, the fibers are crosslinked and the fibers and hyphae are crosslinked via the binder and the metal cation. Accordingly, the mechanical strength of the composite can be particularly enhanced.

The binder is not particularly limited as long as the binder is a compound containing two or more carboxy groups per molecule, and a polyvalent carboxylic acid or polyvalent carboxylate is preferably used. Since the binder has many carboxy groups, the mechanical strength of the composite can be particularly enhanced.

Examples of the polyvalent carboxylic acid include carboxypolysaccharides and organic carboxylic acids.

Of these, examples of carboxypolysaccharides include alginic acid, carboxymethyl amylose, and pectic acid.

Examples of the organic carboxylic acid include an aliphatic dicarboxylic acid, an aromatic dicarboxylic acid, a dicarboxylic acid having a hydroxy group, a tricarboxylic acid, and an amino acid having a plurality of carboxy groups.

Examples of the aliphatic dicarboxylic acid include an oxalic acid, a malonic acid, a succinic acid, a glutaric acid, an adipic acid, a pimelic acid, a suberic acid, an azelaic acid, and a sebacic acid. Examples of the aromatic dicarboxylic acid include a phthalic acid, an isophthalic acid, and a terephthalic acid.

Examples of the dicarboxylic acid having a hydroxy group include tartaric acid and malic acid.

Examples of the tricarboxylic acid include citric acid and aconitic acid.

Examples of the amino acid having a plurality of carboxy groups include aspartic acid and glutamic acid.

The polyvalent carboxylate is a salt in which a carboxy group of a polyvalent carboxylic acid is bonded to a monovalent cation. Examples of the monovalent cation include alkali metal ions such as potassium ions and sodium ions, and ammonium ions.

Among these, the polyvalent carboxylate is preferably an alkali metal salt of a carboxypolysaccharide, more preferably an alkali metal alginate, and still more preferably sodium alginate. The alkali metal alginate is a salt in which a carboxy group of an alginic acid is bonded to an alkali metal ion. An alkali metal alginate, particularly sodium alginate, causes strong ionic crosslinking with a divalent or higher metal cation for a short time. Since the alginic acid contains many carboxy groups, it is easy to form a network by ionic crosslinking. Therefore, by using the alkali metal alginate as the binder, the mechanical strength of the composite can be particularly enhanced.

A content of the binder in the composite is preferably 1.0 mass% or more and 90.0 mass% or less, more preferably 1.5 mass% or more and 85.0 mass% or less, still more preferably 1.5 mass% or more and 80.0 mass% or less, and particularly preferably 5.0 mass% or more and 80.0 mass% or less. When the content of the binder in the composite is within such a range, sufficient mechanical strength is obtained.

### 1.3. Divalent or Higher Metal Cation

The divalent or higher metal cation contributes to ionic crosslinking between carboxy groups. By the ionic crosslinking, hyphae are crosslinked with each other, fibers are crosslinked with each other, and fibers and hyphae are crosslinked with each other. Accordingly, gelation of the ionic crosslinked product occurs, thereby enhancing the mechanical strength of the composite. In the following description, the "divalent or higher metal cation" is also simply referred to as a "metal cation".

The metal cation is not particularly limited, and ions of at least one metal element selected from the group consisting of Ca, Mg, Ba, Cu, Fe, Al, and Zn are preferably used. These metal elements are useful as a metal cation to be added to the composite because the metal element hardly affects characteristics of the composite. Accordingly, the characteristics of the composite can be stabilized.

The metal cation also contributes to reducing reactivity of the carboxy group. Since the carboxy group has hydrophilicity, when a metal cation acts on the carboxy group contained in the binder, hydrophilicity of the composite is reduced, and moisture resistance of the composite can be enhanced.

The content of the metal cation in the composite is measured as follows.

First, 10 mg of the composite is cut out as a test piece. Next, the test piece is immersed in 10 mL of an aqueous solution of sodium hydroxide having a concentration of 30 mass%. Accordingly, metal cations contained in the test piece are eluted. Next, a solution containing eluted metal cations is subjected to quantitative analysis by high performance liquid chromatography to measure a concentration of the metal cations. The obtained concentration is defined as the content of the metal cation in the composite.

The content of the metal cation in the composite thus measured is preferably 3 × 10⁻⁶ mol/L or more and 170 × 10⁻⁶ mol/L or less, more preferably 5 × 10⁻⁶ mol/L or more and 100 × 10⁻⁶ mol/L or less, and further preferably 10 × 10⁻⁶ mol/L or more and 80 × 10⁻⁶ mol/L or less.

By setting the content of the metal cation within the above range, it is possible to optimize an amount of the metal cation with respect to the binder. Accordingly, the moisture resistance of the composite can be sufficiently enhanced, and occurrence of a failure in which excessive metal cations are eluted without being held in the composite can be prevented.

When the content of the metal cations is below the above lower limit value, the amount of the metal cations is insufficient with respect to the binder, and the moisture resistance of the composite may decrease. On the other hand, when the content of the metal cations exceeds the above upper limit value, the amount of the metal cations may become excessive with respect to the binder. In this case, excessive metal cations may be eluted from the composite.

### 1.4. Fiber

The composite may contain fibers. An addition of the fiber further enhances the mechanical strength of the composite.

The fiber is not particularly limited, and a wide range of fiber materials can be used. Examples of the fibers include natural fibers such as animal fibers and plant fibers, and chemical fibers such as organic fibers, inorganic fibers, and organic-inorganic composite fibers. Specifically, at least one selected from the group consisting of cellulose, silk, wool, cotton, hemp, kenaf, flax, ramie, jute, Manila hemp, sisal, a coniferous tree, and a broad leaf tree is preferably used. These may be used alone, may be appropriately mixed and used, or may be used as regenerated fibers subjected to purification or the like.

Examples of a raw material for the fiber include waste paper and old cloth, and it is sufficient that the raw material contains at least one of the above fibers. The fibers may be subjected to various surface treatments. A material for the fiber may be a pure substance or a material containing a plurality of components such as impurities, additives, and other components.

Among these, fibers containing cellulose are more preferable. The cellulose contains a large number of hydroxy groups in a molecular structure. Therefore, reaction with the binder is also likely to occur, and the mechanical strength and moisture resistance of the composite are likely to be improved.

The average diameter of the fibers is not particularly limited, and is preferably larger than the average diameter of hyphae. Specifically, the average diameter of the fibers is preferably 1.0 µm or more and 20.0 µm or less, and more preferably 3.0 µm or more and 15.0 µm or less. If the average diameter of the fibers is within the range, the mechanical strength of the composite can be particularly enhanced.

The average diameter of the fibers is measured as follows.

First, the composite is magnified and observed so that 100 or more fibers are contained in one image, and an image is acquired. Next, 10 or more fiber images are randomly selected, and a width of a fiber image is measured. Then, an average value of measured values is taken as the average diameter of the fibers.

An average length of the fibers is not particularly limited, and is preferably 0.001 mm or more and 5.0 mm or less, more preferably 0.002 mm or more and 3.0 mm or less, and still more preferably 0.003 mm or more and 2.0 mm or less. When the average length of the fibers is within the range, for example, the fibers are oriented along the surface of the composite, and the fibers are moderately entangled with each other. Accordingly, the mechanical strength of the composite can be particularly enhanced.

The average length of the fibers is measured as follows.

First, the composite is magnified and observed so that 100 or more fibers are contained in one image, and an image is acquired. Next, 10 or more fiber images are randomly selected, and a maximum length that can be taken in the fiber image is measured. Then, an average value of measured values is taken as the average length of the fibers.

### 1.5. Additive

The composite may contain any additive. Examples of the additives include a plasticizer, a stabilizer, an antioxidant, an ultraviolet absorber, a lubricant, a flame retardant, an antistatic agent, and a filler, and one or two or more thereof are used.

Examples of the plasticizer include sugar alcohols, vegetable oils, adipic acid ester-based plasticizers, phthalate ester-based plasticizers, trimellitic acid ester-based plasticizers, polyester-based plasticizers, (meth)acrylic acid ester polymers, ethylene copolymer elastomers, chlorinated polyethylene (CPE), (meth)acrylic resins (PMMA), polystyrene resins (PS), polyvinyl acetate resins (PVAc), acrylonitrile-butadiene rubber (NBR), and styrene-butadiene rubber (SBR).

Examples of the sugar alcohol include maltitol, lactitol, tetritol, pentitol, hexitol, erythritol, sorbitol, xylitol, mannitol, and glycerin.

Examples of the vegetable oil include epoxidized vegetable oils such as epoxidized soybean oil (ESBO) and epoxidized linseed oil (ELSO).

The composite preferably contains glycerin or a vegetable oil. By containing these, flexibility of the composite can be enhanced. As a result, the texture of the composite body can be further enhanced.

A content of the plasticizer in the composite is not particularly limited, and is preferably 10.0 mass% or less, more preferably 0.1 mass% or more and 7.0 mass% or less, and still more preferably 0.5 mass% or more and 4.0 mass% or less. Accordingly, a composite having both mechanical strength and flexibility is obtained.

### 1.6. Molding of Composite

The composite is formed by, for example, mixing the hyphae, binder, metal cation, and fiber, and heating the mixture. Heating the mixture further promotes chemical bonding between the hyphae, between the hyphae and the fibers, and between the fibers.

A mixing ratio of the hyphae, the binder, the metal cation, and the fiber in the composite can be appropriately set according to application and required performance of the composite. The mixing ratio of the hyphae, the binder, the metal cation, and the fiber can be expressed by, for example, a total content of the binder and the metal cation in the composite, or a ratio of the content of hyphae to fiber.

Among these, the total content of the binder and the metal cation in the composite is preferably 1.0 mass% or more and 90.0 mass% or less, more preferably 1.5 mass% or more and 85.0 mass% or less, still more preferably 1.5 mass% or more and 80.0 mass% or less, and particularly preferably 5.0 mass% or more and 80.0 mass% or less. If the total content of the binder and the metal cation in the composite is within the range, the mixing ratio of the hyphae, the binder, the metal cation, and the fiber is optimized, and sufficient mechanical strength, moisture resistance, and texture are obtained.

A mass ratio of hyphae to fibers is preferably 0.10 or more and 9.0 or less, more preferably 0.20 or more and 5.0 or less, and still more preferably 0.30 or more and 3.0 or less. If the mass ratio of hyphae to fibers is within the range, it is possible to balance high mechanical strength and good texture in the composite.

When the mass ratio of hyphae to fibers is below the above lower limit value, the texture of the composite may decrease. On the other hand, when the mass ratio of hyphae to fibers exceeds the above upper limit value, the mechanical strength of the composite may decrease.

### 1.7. Dispersion of Components in Composite

In the composite, it is preferable that the binder and the metal cation are dispersed in hyphae or fibers. A dispersed state refers to a state in which the binder and the metal cations are interspersed between hyphae, between fibers, and between the hyphae and fibers. The binder and the metal cation physically and chemically crosslink the hyphae, the fibers, and the hyphae and fibers, thereby fixing a positional relationship therebetween. Accordingly, the composite can maintain a desired shape such as a sheet because an outer shape of the composite is fixed and maintained. Since the hyphae and fibers spread so as to be entangled with each other, good texture is imparted to the composite.

In the composite, unbound hyphae or fibers may be present, and a proportion thereof can be adjusted by a blending amount of the binder and the metal cation. The more portions of the hyphae and fibers that are not bound together, the more easily the resulting composite is deformed. The more the bound portions, the greater rigidity and mechanical strength of the resulting composite.

### 1.8. Use of Composite

The composite can be molded into various shapes as necessary. The composite can be molded into a two-dimensional shape such as a sheet, board, or web, a three-dimensional shape such as a block, rod, or sphere, and the like. Typical examples of the composite include paper, nonwoven fabric, wallpaper, wrapping paper, colored paper, paper for drawing, a fiber board, a filter, a liquid absorbent, a sound absorber, a cushioning material, and a mat.

Since the composite according to the embodiment is excellent in mechanical strength, moisture resistance, and texture, the composite is particularly useful as a natural material such as a leather substitute material (substitute leather).

### 2. Method for Producing Composite

First, the method for producing a composite according to the embodiment will be described.

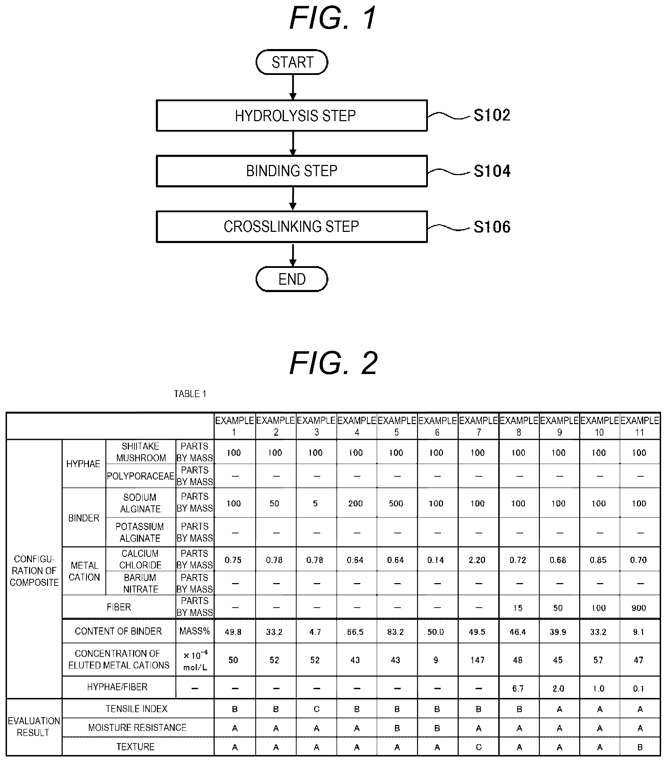

FIG. 1 is a process diagram showing a configuration of the method for producing a composite according to the embodiment.

The method for producing a composite shown in FIG. 1 includes a hydrolysis step S102, a binding step S104, and a crosslinking step S106.

### 2.1. Hydrolysis Step

In hydrolysis step S102, first, a sheet containing hyphae is prepared. The sheet containing hyphae is formed, for example, by collecting a large number of hyphae and molding or paper-making the hyphae into a sheet. The sheet may have a flat plate shape or may be molded into a predetermined shape. The hyphae may be a defibrated mycelium. The mycelium is an aggregate of hyphae. A method of imparting mechanical energy, for example, is used for defibration of mycelium. In particular, by using a defibration machine, a mycelium can be defibrated to obtain hyphae while reducing significant damage to the hyphae. A defibrating method may be a wet method, but a dry method is preferably used. The dry method refers to a method of defibration in air such as the atmosphere, rather than in a liquid such as water. As the defibration machine, an impeller mill capable of dry defibration is preferably used.

Next, the sheet containing hyphae is subjected to a hydrolysis treatment. By the hydrolysis treatment, components constituting the hyphae are hydrolyzed, and reactivity between the hyphae and the binder is enhanced. Specifically, when hyphae contain chitin, an acetamide group contained in the chitin is deacetylated by the hydrolysis treatment and converted into an amino group. The amino group reacts with the carboxy group to form an amide bond. Therefore, an amide bond can be formed between the hyphae and the binder through the hydrolysis treatment. Accordingly, the mechanical strength of the composite can be particularly enhanced.

Examples of the hydrolysis treatment include a treatment of bringing the material into contact with an alkaline solution and a treatment of decomposing the material by an enzyme. Of these, a treatment using an alkaline solution is preferably used. The alkaline solution can be deacetylated particularly efficiently. Examples of alkali used in the alkaline solution include sodium hydroxide, potassium hydroxide, lithium hydroxide, calcium hydroxide, sodium phosphate, and ammonium hydroxide. As the alkaline solution, an aqueous solution thereof is preferably used. An alkali concentration in the alkaline solution is not particularly limited, and is preferably 5 mass% or more and 90 mass% or less, more preferably 10 mass% or more and 50 mass% or less, and still more preferably 20 mass% or more and 40 mass% or less. By setting the alkali concentration within the range, chitin can be deacetylated particularly efficiently.

A mass of the alkali used for the hydrolysis treatment of 1g of hyphae is not particularly limited, and is preferably 3 g or more, more preferably 5 g or more and 100 g or less, and still more preferably 10 g or more and 50 g or less. By setting the mass of the alkali within the range, the deacetylation of chitin can be uniformly performed, and an increase in environmental burden due to an excessive alkaline solution can be reduced.

A temperature (treatment temperature) of the alkaline solution to be brought into contact with hyphae is not particularly limited, and is preferably 10°C or higher and 150°C or lower, more preferably 50°C or higher and 130°C or lower, and still more preferably 70°C or higher and 110°C or lower. By setting the treatment temperature within the range, the deacetylation of chitin can be performed uniformly.

A time (treatment time) for which hyphae is brought into contact with the alkaline solution is not particularly limited, and when the treatment is performed at a treatment temperature described above, the time is preferably 0.1 hours or longer and 1000 hours or shorter, more preferably 1 hour or longer and 100 hours or shorter, and still more preferably 3 hours or longer and 50 hours or shorter. By setting the treatment time within the range, chitin can be deacetylated efficiently and sufficiently.

### 2.2. Binding Step

In the binding step S104, the sheet subjected to the hydrolysis treatment is brought into contact with a binder containing two or more carboxy groups per molecule to bind the sheet to the binder.

The sheet subjected to the hydrolysis treatment contains, for example, a hydroxy group and an amino group when the hyphae contain chitin. When the binder is brought into contact with the sheet, the carboxy group and the hydroxy group form an ester bond, and the carboxy group and the amino group form an amide bond. Accordingly, the sheet and the binder are bound.

A method of bringing the binder into contact with the sheet is not particularly limited, and examples thereof include a method of spraying a solution containing the binder onto the sheet, and a method of immersing the sheet in a solution containing the binder.

A solvent used in the solution containing the binder may be a liquid (solvent or dispersion medium) capable of dissolving or dispersing the binder, and examples thereof include water and various organic solvents.

A concentration of the binder in the solution containing the binder is not particularly limited, and is preferably 0.1 mass% or more and 5.0 mass% or less, and more preferably 0.3 mass% or more and 1.0 mass% or less. If the concentration of the binder is within the range, viscosity of the solution is optimized, and the binder can be applied evenly to the sheet in a short time. It is possible to reduce waste due to an excessive amount of the binder.

If necessary, any additive may be added to the solution containing the binder. Examples of the additive include a condensing agent, an antioxidant, a stabilizer, and a lubricant.

Among these, examples of the condensing agent include known amide condensing agents. Examples of the amide condensing agent include a carbodiimide-based condensing agent, a carbonyldiimidazole-based condensing agent, a triazine-based condensing agent, a phosphonium-based condensing agent, a uronium-based condensing agent, and a phosphoric acid-based condensing agent. By using such a condensing agent, reaction conditions necessary for forming an amide bond can be relaxed. That is, a reaction temperature can be lowered and a reaction time can be shortened as compared with a case where the condensing agent is not used. As a result, binding efficiency of the binder to the sheet can be increased.

Examples of the carbodiimide-based condensing agent include dicyclohexylcarbodiimide (DCC), N-ethyl-N'-3-dimethylaminopropylcarbodiimide (EDC), and diisopropylcarbodiimide (DIPC).

Examples of the carbonyldiimidazole-based condensing agent include carbonyldiimidazole (CDI) and 1,2,4-triazole (CDT).

Examples of the triazine-based condensing agent include 4-(4,6-dimethoxy-1,3,5-triazin-2-yl)-4-methylmorpholinium chloride (DMT-MM).

Examples of the phosphonium-based condensing agent include 1H-benzotriazol-1-yloxytris(dimethylamino)phosphonium hexafluorophosphate (BOP) and 1H-benzotriazol-1-yloxytripyrrolidinophosphonium hexafluorophosphate (pyBOP).

Examples of the uronium-based condensing agent include O-(7-azabenzotriazol-1-yl)-N,N,N',N'-tetramethyluronium hexafluorophosphate (HATU), O-(benzotriazol-1-yl)-N,N,N',N'-tetramethyluronium hexafluorophosphate (HBTU), and {{[(1-cyano-2-ethoxy-2-oxoethylidene)amino]oxy}-4-morpholinomethylene}dimethylammonium hexafluorophosphate (COMU).

Examples of the phosphoric acid-based condensing agent include diphenyl phosphoric acid azide (DPPA) and diethyl phosphoric acid cyanide (DEPC).

An amount of the condensing agent to be added can be adjusted such that a molar equivalent of an active group of the condensing agent is preferably 0.01 molar equivalents or more and 2.0 molar equivalents or less, and more preferably 0.05 molar equivalents or more and 1.5 molar equivalents or less, with respect to the amino group.

After the solution containing the binder is brought into contact with the sheet, the sheet and the binder attached thereto may be heated as necessary. Accordingly, the solvent or the dispersion medium is removed, and drying is promoted. Further, reaction efficiency between the sheet and the binder can be increased.

A heating temperature may be any temperature equal to or higher than a boiling point of the solvent or dispersion medium, and is preferably 60°C or higher and 200°C or lower, and more preferably 80°C or higher and 150°C or lower.

The sheet may contain fibers. When the fiber is contained, as described above, the binder also acts on the fiber, and the hydroxy group contained in the fiber and the carboxy group contained in the binder form an ester bond.

### 2.3. Crosslinking Step

In the crosslinking step S106, the sheet to which the binder is bound is brought into contact with a divalent or higher metal cation. Accordingly, carboxy groups are ionically crosslinked to each other via the metal cation to obtain a composite. The carboxy group contained in the binder is used for reaction with hyphae or fibers, but not all of the carboxy group contribute to the reaction, and there are unreacted carboxy groups. When such an unreacted carboxy group remains in the composite as it is, moisture resistance of the composite is decreased.

In the embodiment, carboxy groups are ionically crosslinked with each other via metal cations. Accordingly, the number of unreacted carboxy groups can be reduced. As a result, the moisture resistance of the composite can be enhanced.

The divalent or higher metal cation is supplied to the sheet as a solution, for example. The solution containing a metal cation is formed by, for example, a method of dissolving a metal cationic substance in water. Examples of the metal cationic substance include a reaction product of a metal cation and an anion, that is, a salt. The anion is not particularly limited, and examples thereof include chloride ion, nitrate ion, carbonate ion, sulfate ion, and lactate ion. Examples of salts of divalent or higher metal cations and anions thereof include calcium chloride, calcium lactate, iron chloride, magnesium chloride, barium nitrate, and copper nitrate.

In the solution containing the metal cation, a concentration of the salt is not particularly limited, and is preferably 0.005 mass% or more and 0.50 mass% or less, and more preferably 0.010 mass% or more and 0.30 mass% or less. Accordingly, it is possible to cause the metal cations to uniformly act on the sheet to which the binder is bound in a short time.

After the solution containing the metal cation is brought into contact with the sheet, the sheet and the metal cations attached thereto may be heated as necessary. Accordingly, the solvent or the dispersion medium is removed, and drying is promoted. Further, the reaction efficiency between the binder and the metal cation can be increased.

A heating temperature may be any temperature equal to or higher than the boiling point of the solvent or dispersion medium, and is preferably 60°C or higher and 200°C or lower, and more preferably 80°C or higher and 150°C or lower.

According to the method as described above, it is possible to produce a composite having excellent mechanical strength and moisture resistance and good texture.

### 3. Advantages Exerted by Embodiment

As described above, the composite according to the embodiment contains: mushroom hyphae; a binder that contains two or more carboxy groups per molecule and binds to the hyphae; and a divalent or higher metal cation. In the composite according to the embodiment, carboxy groups are ionically crosslinked to each other via the metal cation.

According to such a configuration, a composite having excellent mechanical strength and moisture resistance and good texture can be obtained.

The composite according to the embodiment further includes a fiber.

According to such a configuration, a composite having particularly high mechanical strength can be obtained.

In the composite according to the embodiment, the fiber contains cellulose.

According to such a configuration, since the cellulose contains a large number of hydroxy groups in the molecular structure, reaction with the crosslinking agent is also likely to occur, and the mechanical strength and moisture resistance of the composite are likely to be improved.

In the composite according to the embodiment, the metal cation is an ion of at least one metal element selected from the group consisting of Ca, Mg, Ba, Cu, Fe, Al, and Zn.

According to such a configuration, since the metal cation hardly affects characteristics of the composite, the characteristics of the composite can be stabilized.

In the composite according to the embodiment, the binder contains a polyvalent carboxylic acid or a polyvalent carboxylate.

According to such a configuration, a composite having particularly high mechanical strength can be obtained.

In the composite according to the embodiment, the content of the binder is 1.5 mass% or more and 80.0 mass% or less.

According to such a configuration, the composite can have sufficient mechanical strength.

In the composite according to the embodiment, when 10 mg of the composite is immersed in 10 mL of an aqueous solution of sodium hydroxide having a concentration of 30 mass%, a concentration of metal cations eluted is 3 × 10⁻⁶ mol/L or more and 170 × 10⁻⁶ mol/L or less.

According to such a configuration, the moisture resistance of the composite can be sufficiently enhanced, and occurrence of a failure in which excessive metal cations are eluted without being held in the composite can be prevented.

The composite according to the embodiment further contains glycerin or a vegetable oil.

According to such a configuration, the flexibility of the composite can be enhanced. As a result, the texture of the composite body can be further enhanced.

In the composite according to the embodiment, the hyphae contain chitin, and the binder is amide-bonded to the hyphae.

According to such a configuration, the mechanical strength of the composite can be particularly enhanced.

The method for producing a composite according to the embodiment is a method for producing the composite according to the embodiment, and the method includes the hydrolysis step S102, the binding step S104, and the crosslinking step S106. In the hydrolysis step S102, a sheet containing hyphae is subjected to a hydrolysis treatment. In the binding step S104, the sheet subjected to the hydrolysis treatment is brought into contact with a binder containing two or more carboxy groups per molecule to bind the sheet to the binder. In the crosslinking step S106, the sheet to which the binder is bound is brought into contact with the metal cation, and carboxy groups are ionically crosslinked with each other via the metal cation to obtain a composite.

According to such a configuration, a composite having excellent mechanical strength and moisture resistance and good texture can be produced.

Although the composite and the method for producing a composite in the present disclosure have been described above based on preferred embodiments, the present disclosure is not limited thereto. For example, in the composite according to the present disclosure, each part of the embodiment may be replaced with any component having a similar function, or any component may be added to the embodiment.

The method for producing a composite according to the present disclosure may be one in which any desired process is added to the above embodiment.

### Examples

Next, specific examples of the present disclosure will be described.

### 4. Preparation of Composite

### 4.1. Example 1

First, 1g of a sheet containing hyphae was subjected to a hydrolysis treatment. The hydrolysis treatment is a treatment in which the sheet is immersed in 100 mL of an alkaline solution at 100°C for 4 hours. An aqueous solution of sodium hydroxide having a concentration of 30 mass% was used as the alkaline solution.

Next, 1g of sodium alginate as a binder was dissolved in 200 mL of pure water to prepare an aqueous solution of the sodium alginate.

Next, the aqueous solution of sodium alginate was uniformly sprayed onto the sheet subjected to the hydrolysis treatment and allowed to permeate. Thereafter, the sheet was placed in a thermostatic chamber and heated at 100°C until drying.

Next, 7.5 mg of calcium chloride as a salt containing a metal cation was dissolved in 30 mL of pure water to prepare an aqueous solution of the calcium chloride.

Next, the aqueous solution of calcium chloride was uniformly sprayed onto the sheet impregnated with the aqueous solution of the sodium alginate and allowed to permeate. Thereafter, the sheet was placed in a thermostatic chamber and heated at 100°C until drying. Thus, a composite in Example 1 was obtained.

### 4.2. Examples 2 to 21 and Comparative Examples 1 to 4

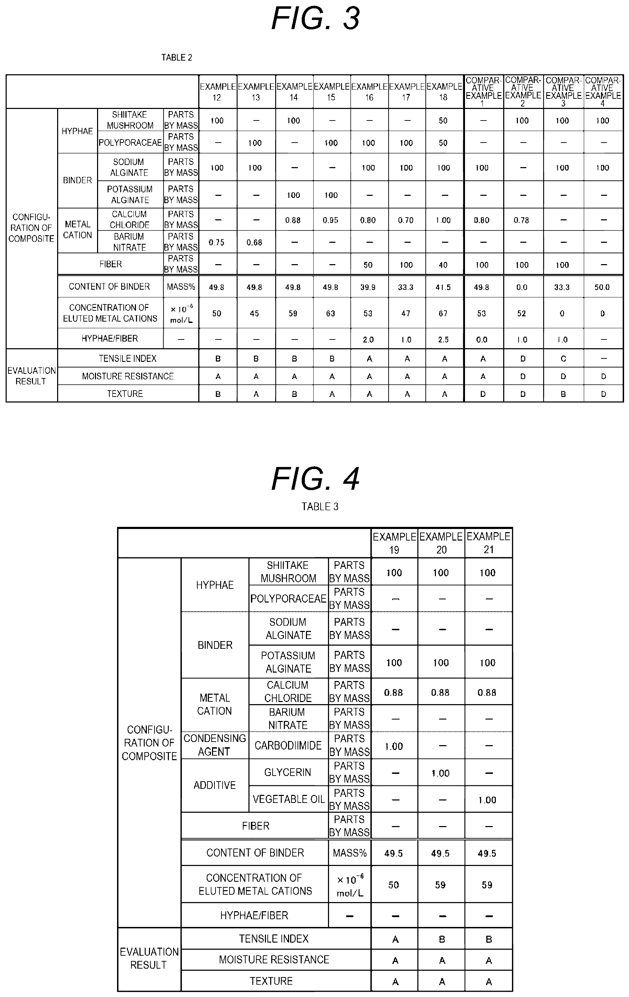

Composites in Examples 2 to 21 and Comparative Examples 1 to 4 were obtained in a similar manner as in Example 1 except that production conditions of the composite were changed as shown in FIG. 2 (Table 1), FIG. 3 (Table 2), or FIG. 4 (Table 3). Details of components used in the production of the composite are as follows.
- Hyphae (shiitake mushroom, average diameter: 3.0 µm, average length: 0.1 mm)
- Hyphae (polyporaceae, average diameter: 5.0 µm, average length: 0.5 mm)
- Fiber (cellulose, average diameter 30 µm, average length 1.0 mm)

### 5. Evaluation of Composite

### 5.1. Tensile Index

First, a composite was punched out to prepare a test piece. Next, using AUTOGRAPH AGC-X 500N (manufactured by Shimadzu Corporation), a tensile property test was performed on the test piece according to JIS P 8113:2006 to determine a tensile index. An obtained value was evaluated in view of the following evaluation criteria. "Reference value" in the evaluation criteria is the tensile index measured for the composite in Comparative Example 4. Evaluation results are shown in each table.
A: 150% or more of the reference value
B: 125% or more and less than 150% of the reference value
C: 100% or more and less than 125% of the reference value
D: less than 100% of the reference value

### 5.2. Moisture Resistance

First, the composite was cut into a rectangular parallelepiped shape of 2 cm × 1 cm × 1 cm to prepare a test piece. An aluminum plate was placed inside a thermo-hygrostat, and test pieces were disposed at four corners. An aluminum plate weighing 800 g was placed thereon to apply a pressure of 0.01 MPa. After measuring an initial gap between the aluminum plates, an inside of the thermo-hygrostat was heated and humidified to 60°C and 90% RH. After 120 hours, a gap between the aluminum plates was measured again, and a displacement rate from the initial gap (compressive creep rate) was determined. An obtained value was evaluated in view of the following evaluation criteria. Evaluation results are shown in each Table.
A: Compressive creep rate is less than 5%
B: Compressive creep rate is 5% or more and less than 10%
C: Compressive creep rate is 10% or more and less than 20%
D: Compressive creep rate is 20% or more

### 5.3. Texture

The composite was subjected to sensory evaluation by 10 panelists (evaluators). The sensory evaluation was performed according to a ranking method for sensory evaluation analysis of JIS Z 9080:2004. Specifically, tactile feel of a surface of the composite was evaluated by 10 panelists in accordance with a 9-level preference scale defined in JIS Z 9080:2004. In particular, the tactile feel refers to a degree of smoothness and pleasant feeling to touch. The obtained preference scale was evaluated in view of the following evaluation criteria. Evaluation results are shown in each table. In the 9-level preference scale, 9 indicates most pleasant, and 1 indicates most unpleasant.
A: Preference scale is 8 to 9
B: Preference scale is 6 to 7
C: Preference scale is 4 to 5
D: Preference scale is 1 to 3

### 5.4. Consideration

The following is recognized from the evaluation results shown in FIG. 2 (Table 1), FIG. 3 (Table 2), and FIG. 4 (Table 3).
- A composite having excellent mechanical strength, moisture resistance, and texture could be achieved by containing mushroom hyphae, a binder, and a divalent or higher metal cation.
- In particular, it was confirmed that the texture of the composite can be enhanced by adding an appropriate number of mushroom hyphae.
- In particular, it was confirmed that the moisture resistance of the composite can be enhanced by adding an appropriate number of divalent or higher metal cations.

## Claims

1. A composite comprising:
mushroom hyphae;
a binder containing two or more carboxy groups per molecule and binding to the hyphae; and
a divalent or higher metal cation, wherein
the carboxy groups are ionically crosslinked via the metal cation.

2. The composite according to claim 1, further comprising:
a fiber.

3. The composite according to claim 2, wherein
the fiber contains cellulose.

4. The composite according to claim 1, wherein
the metal cation is an ion of at least one metal element selected from a group consisting of Ca, Mg, Ba, Cu, Fe, Al, and Zn.

5. The composite according to claim 1, wherein
the binder contains a polyvalent carboxylic acid or a polyvalent carboxylate.

6. The composite according to claim 1, wherein
a content of the binder is 1.5 mass% or more and 80.0 mass% or less.

7. The composite according to claim 1, wherein
when 10 mg of the composite is immersed in 10 mL of an aqueous solution of sodium hydroxide having a concentration of 30 mass%, a concentration of the metal cation eluted is 3 × 10⁻⁶ mol/L or more and 170 × 10⁻⁶ mol/L or less.

8. The composite according to claim 1, further comprising:
glycerin or a vegetable oil.

9. The composite according to claim 1, wherein
the hyphae contain chitin, and
the binder is amide-bonded to the hyphae.

10. A method for producing a composite, which is a method for producing the composite according to claim 1, the method comprising:
performing a hydrolysis treatment on a sheet containing the hyphae;
bringing the sheet subjected to the hydrolysis treatment into contact with the binder containing two or more carboxy groups per molecule to bind the sheet and the binder to each other; and
bringing the sheet to which the binder is bound into contact with the metal cation to ionically crosslink the carboxy groups via the metal cation to obtain the composite.
